# FASCICULE DE BREVET EUROPEEN

(11) **EP 0 675 576 B1**
(45) Date de publication et mention de la délivrance du brevet: **18.04.2007**
(21) Numéro de dépôt: 95104518.6
(22) Date de dépôt: 28.03.1995
(51) Int. Cl.: H01R 35/02, H01B 7/08

(54) **Ruban de liaison électrique pour contacteur tournant, en particulier pour véhicules automobiles**
Elektrisches Bandkabel für drehenden Verbinder, insbesondere für Automobil-Fahrzeuge
Electrical flat ribbon cable for turnable line connector especially for automotive vehicles

(30) Priorité: 30.03.1994 FR 9403749
(43) Date de publication de la demande: 04.10.1995
(73) Titulaire: Valeo Switches & Detection Systems - VSDS, 94000 Créteil (FR)
(72) Inventeur: Hofmann, Bertrand, F-91380 Chilly Mazarin (FR)
(74) Mandataire: Croonenbroek, Thomas Jakob

(56) Documents cités:
- EP-A- 0 060 671
- EP-A- 0 479 568
- FR-A- 2 308 171
- GB-A- 2 047 947
- GB-A- 2 058 438
- PATENT ABSTRACTS OF JAPAN vol. 13, no. 220 (E-762) (3568) 23 Mai 1989 & JP-A-01 033 812 (NEC CORP.)

## Description

La présente invention concerne les rubans de liaison électrique pour contacteurs tournants, en particulier pour véhicules automobiles.

De tels contacteurs tournants sont décrits par exemple dans les documents EP-A-0 479 567 et EP-A-0 479 568.

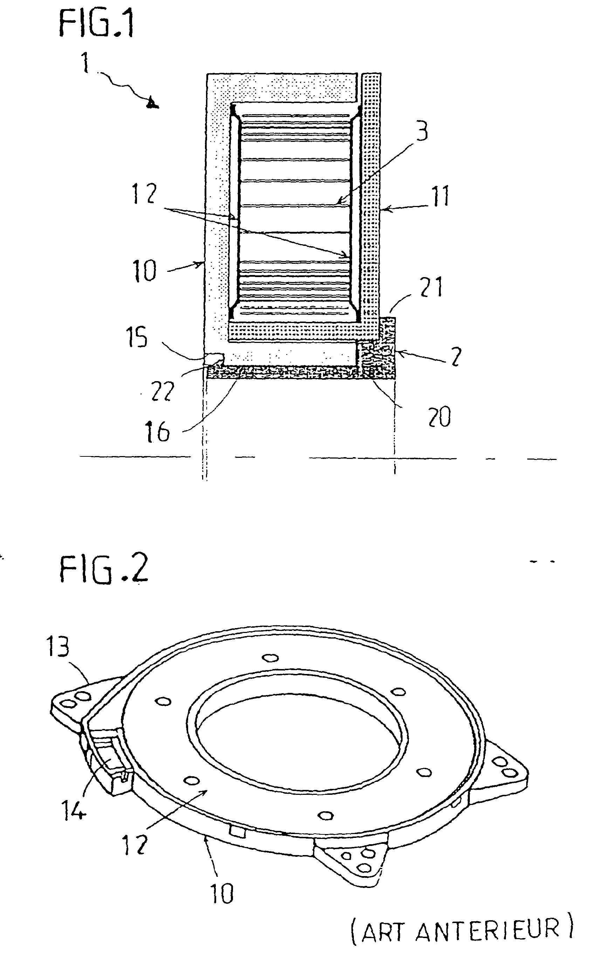

Un tel contacteur (figures 1 et 2) comporte deux parties coaxiales 1,2 montées mobiles en rotation l'une par rapport à l'autre à l'encontre de moyens souples de liaison électrique comportant un ruban 3 enroulé en spirale entre lesdites parties.

Dans un véhicule automobile l'une des parties est mobile en rotation en étant liée, par exemple, au volant de direction, tandis que l'autre partie est fixe en étant alors liée à la colonne de direction.

Par exemple la partie fixe 1 comporte un boîtier annulaire creux 10, à section en forme de U, recouvert par un couvercle annulaire 11, à section en forme de L inversé, appartenant à la partie mobile 2, en sorte qu'il est défini une cavité à l'intérieur de laquelle est monté le ruban 3. Le boîtier 10 comporte un alésage central 16 ainsi qu'une portion 14 pour attelage de l'une des extrémités du ruban 3 au boîtier 10 et réalisation des connexions électriques.

Le boîtier 10 comporte également des oreilles 13 pour sa fixation à une partie fixe du véhicule, ici le boîtier de support portant les manettes de commande de l'éclairage et de l'essuyage du véhicule.

La partie mobile 2 présente un moyeu 20 solidaire du couvercle 11 et doté d'une collerette étagée 21 pour son calage axial respectivement par rapport au couvercle 11, dont la partie centrale annulaire pénètre à l'intérieur du boîtier 10, et à la partie centrale tubulaire du boîtier 10.

Dans l'autre sens axial ce moyeu 20 est calé axialement par rapport à l'autre extrémité axiale de la partie centrale du boîtier 10. Pour ce faire le moyeu 20 présente des dents 22 coopérant avec le fond d'une ou de plusieurs échancrures 15 prévues à cet effet dans ladite extrémité de ladite partie centrale du boîtier 10. Le montage se fait par encliquetage des dents 22 dans la ou les échancrures 15.

Le moyeu 20 est donc monté tourillonnant à l'intérieur de l'alésage central 16 du boîtier 10.

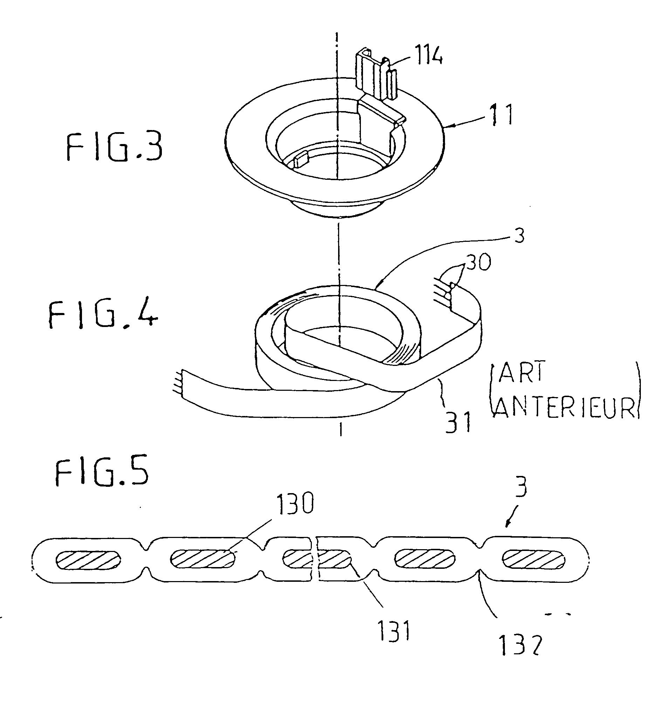

Bien entendu le couvercle 11 présente également une portion 114 (figure 3) pour attelage de l'autre extrémité du ruban 3.

Ainsi il est possible d'enrouler et de dérouler le ruban 3 lorsque l'on manoeuvre le volant, le nombre de tours de volant, que l'on peut effectuer dans un sens et dans l'autre, étant usuellement de 1,75 à 3,5 tours.

Ce ruban 3 permet de réaliser une liaison électrique sans coupure électrique entre un ou des premiers dispositifs liés au volant du véhicule et un ou des seconds dispositifs liés à la colonne de direction ou au châssis du véhicule.

Les premiers dispositifs peuvent consister par exemple en des commutateurs électriques, tels que celui de l'avertisseur sonore, ou en un dispositif de sécurité à coussin gonflable dénommé "Airbag", qui se gonfle en cas d'accident pour protéger le conducteur.

Usuellement le ruban comporte des conducteurs électriques 30 (ou pistes conductrices) en cuivre refendu placés sur un film en polyester 31 électriquement isolant recouvert d'un isolant dit "coverlay" (figure 4), en pratique un autre film de polyester ; de la colle, placé notamment entre les fils permettant une liaison des deux films, qui enrobent ainsi les fils.

Ces fils conducteurs 30, usuellement à section rectangulaire, sont obtenus en fendant une bande électriquement conductrice.

Ceci nécessite des cisaillages de haute précision. En outre, le ruban, notamment à cause du polyester, est agressif et raye le boîtier 10 et le couvercle 11. Ce ruban n'est pas assez souple et présente un mauvais coefficient de frottement au contact du boîtier 10 et du couvercle 11. Pour cette raison on prévoit, dans certaines applications, des bandes de protection 12, portées par le boîtier 10 et le couvercle 11, pour éviter notamment que le ruban 3 ne s'incruste dans le couvercle 11 et le boîtier 10 usuellement en matière plastique. Ces bandes 12 comportent en pratique des formes embouties, qui réduisent les jeux dans le sens de la hauteur du ruban 3 et qui évitent ainsi partiellement les bruits de fonctionnement.

Etant donné le coût engendré par les bandes, certains constructeurs préfèrent utiliser des bandes 12 non embouties, sous forme de feutrine, permettant une réduction des bruits. Néanmoins cela nécessite la présence de pièces supplémentaires.

La présente invention a pour objet de pallier ces inconvénients et donc de créer, de manière simple et économique, un nouveau ruban peu agressif, souple à coefficient de frottement réduit et peu bruyant, tout en favorisant la réduction du nombre de pièces du contacteur tournant.

Suivant l'invention, un ruban de liaison électrique du type sus-indiqué est caractérisé en ce que les conducteurs consistent en des fils électriquement conducteurs aplatis par laminage, et en ce que l'isolant électrique est en matériau globalement insonore à faible coefficient de frottement et présentant un module d'élasticité stable pour des températures correspondant au domaine d'utilisation du véhicule.

Grâce à l'invention le ruban est peu agressif, le coefficient de frottement du ruban, au contact du boîtier et du couvercle, est réduit et le contacteur tournant n'a pas besoin de pièces supplémentaires pour atténuer les bruits, ledit ruban étant peu bruyant du fait qu'il est globalement insonore. Le ruban est également plus souple du fait des fils aplatis par laminage et est donc adapté à frotter directement au contact du boîtier et du couvercle du contacteur tournant. Du fait de son module d'élasticité de l'isolant ce ruban demeure souple dans son domaine d'utilisation, c'est-à-dire pour des températures correspondant à des véhicules circulant dans les pays froid et chaud.

Globalement ce module d'élasticité est stable entre -40° et 100°.

En outre les fils laminés permettent un raccord direct avec les connecteurs associés au contacteur tournant, aucune pièce intermédiaire agrafée sur les fils du ruban n'étant nécessaire. En outre le laminage permet d'éviter les amorces de rupture et la formation de bavures.

La fiabilité du contacteur tournant est ainsi augmentée. Ces fils ont des propriétés supérieures à un fil refendu de l'art antérieur de section équivalente.

De plus, grâce au laminage des fils, on obtient des tolérances de fabrication plus réduites.

Les fils électriques peuvent être en cuivre laminé ou en bronze, laiton et maillechort.

Dans une forme de réalisation, l'isolant est un copolymère d'éthylène et de tretrafluoréthylène stable pour des températures comprises entre -55° et 150°.

En variante les fils peuvent être en "Delrin" ou en "Rilsan" c'est-à-dire à base de résine acétal ou de polyamide 11.

Avantageusement, du fait qu'ils sont obtenus par laminage, les fils électriques sont à bords arrondis et il en est de même des rebords du ruban. Ainsi ce ruban est encore moins agressif.

On appréciera que le pas entre deux fils conducteurs peut être réduit et que l'isolant électrique peut être surmoulé, avantageusement extrudé sur les fils conducteurs. Ce surmoulage permet d'obtenir également des tolérances de fabrication plus réduites.

Toutes ces dispositions permettent de réduire l'encombrement du contacteur tournant, notamment dans le sens de la hauteur du ruban.

Si besoin est, on peut même augmenter légèrement l'épaisseur des fils conducteurs du fait que l'isolant selon l'invention est plus souple que les films polyester de l'art antérieur.

Le ruban selon l'invention permet donc de réduire les coûts de fabrication et d'augmenter la durée de vie des contacteurs tournants et de leurs appareils associés, avec réduction des bruits et des phénomènes d'incrustation du ruban.

La description en annexe illustre l'invention en regard des dessins annexés dans lesquels :
- la figure 1 est une vue en demi-coupe axiale d'un contacteur tournant selon l'art antérieur ;
- la figure 2 est une vue en perspective d'un boîtier de commutateur tournant selon l'art antérieur ;
- la figure 3 est une vue en perspective du couvercle du commutateur tournant de l'art antérieur ;
- la figure 4 est une vue en perspective d'un ruban de liaison électrique de l'art antérieur ;
- la figure 5 est une vue en coupe axiale d'un ruban selon la présente invention.

Dans la figure 5 est illustré un ruban de liaison électrique pour contacteur tournant en particulier pour véhicules automobiles.

Ce ruban est destiné à être monté entre le boîtier 10 et le couvercle 11 du contacteur tournant de la figure 1.

Ce ruban de liaison électrique comporte des fils électriquement conducteurs 130 enrobés par un isolant électrique 131.

Suivant l'invention un ruban de liaison électrique du type sus-indiqué est caractérisé en ce que les fils conducteurs sont des fils aplatis par laminage, et en ce que l'isolant 131 est en matériau globalement insonore à faible coefficient de frottement et présentant un module d'élasticité stable pour des températures correspondant au domaine d'utilisation du véhicule. Par exemple l'isolant 131 est à base de copolymère d'éthylène et de tretrafluoréthylène. En variante l'isolant 131 peut être à base de résine acétal ou de polyamide 11 tel que du "Delrin" ou de "Rilsan".

Les fils 130 peuvent être à section rectangulaire, mais ici grâce au laminage, ils sont avantageusement à bord (ou champ) arrondi. Ici les fils 130 sont des fils de cuivre laminés recuits à bords ronds de laminage de jauge AWG28 (norme américaine). Ces fils sont obtenus par relaminage d'un fil rond.

Ce procédé d'obtention du fil confère des propriétés supérieures à fils de cuivre refendus de section équivalente. On notera que l'aplatissement du fil confère à celui-ci une inertie plus faible et le rend plus flexible.

D'une manière générale, l'isolant électrique selon l'invention confère au câble des propriétés telles qu'il peut résister à de fortes températures pendant quelques minutes, ce qui facilite les opérations de surmoulage. En outre son coefficient de frottement est faible et son module d'élasticité est stable. Ainsi la température d'utilisation du ruban à base de copolymère d'éthylène et de trétrafluoréthylène est de -55° à +150°, en sorte qu'il peut équiper des véhicules circulant dans des pays froid ou chaud.

On notera que le pas, correspondant à l'enrobage d'un fil 131, est faible compte tenu de la résistance des fils.

Par exemple dans l'art antérieur avec des fils de cuivre refendus, on obtenait des pas de l'ordre 2,54mm.

Grâce à l'invention avec un fil de cuivre laminé, on peut obtenir des pas de l'ordre de 1,27mm du fait que le fil n'est pas refendu à partir d'une bande.

L'épaisseur du ruban peut être même légèrement supérieure à ceux de l'art antérieur.

D'une manière générale les épaisseurs du ruban sont inférieures à 0,40mm et on peut obtenir les fils conducteurs avec une résistance de l'ordre de 2,53 Ohms/km pour une température de 20°, l'épaisseur du fil étant de l'ordre de 0,13mm. Bien entendu tout cela dépend des applications notamment de la puissance électrique à transmettre.

Avantageusement l'isolant 131 est surmoulé sur les fils 130, en sorte qu'il n'y a pas besoin d'effectuer une opération de collage entre deux films. Ici on procède avantageusement à un enrobage par extrusion de l'isolant, les bords du champ du ruban étant arrondis entraînant une réduction d'épaisseur 132 entre deux fils 131 consécutifs. Cette réduction d'épaisseur 132 favorise la souplesse du ruban 3.

On appréciera que le ruban est plus souple, notamment grâce à l'isolant selon l'invention, et que le ruban 3 est moins bruyant au contact du boîtier 12 et du couvercle 11 de la figure 1.

Ce ruban à faible coefficient de frottement est moins agressif, notamment du fait de ses bords ronds et est adapté à frotter directement au contact du boîtier 10 et du couvercle 11, ici en matière plastique.

Grâce à l'utilisation d'un isolant en matériau précité, on obtient un ruban peu bruyant c'est-à-dire globalement insonore.

D'une manière générale un contacteur tournant équipé d'un ruban selon l'invention permet de répondre aux caractéristiques électriques et mécaniques du cahier des charges imposé par les Constructeurs Automobiles avec une épaisseur réduite.

Cette réduction d'épaisseur permet d'augmenter le volume pour une autre application ou de mieux s'adapter au différent style de support.

En outre les fils relaminés subissent un phénomène d'écrouissage qui leur confère une structure aux performances plus élevées. Le ruban 3 est donc plus résistant et a une bonne tenue mécanique.

Ces fils sont obtenus à partir d'un fil rond, usuellement aplati par laminage à froid de précision, qui permet ainsi d'obtenir aisément des fils à bords ronds sans bavure et amorce de rupture. Le ruban peut ainsi s'enrouler et se dérouler sans coupure électrique.

Grâce au laminage précité, les tolérances de fabrication générale sur la largeur et l'épaisseur du fil sont très réduites et il en est de même du ruban.

En outre les connexions des fils avec les connecteurs associés au contacteur tournant sont plus aisées et l'on peut effectuer un raccord direct des fils avec les connecteurs, ce qui augmente la fiabilité du contacteur tournant et permet une réduction des coûts.

D'une manière générale la manoeuvre du contacteur tournant est plus douce notamment grâce au faible coefficient de frottement du ruban et à sa souplesse.

En outre on n'est pas limité dans le choix des matières plastiques pour le boîtier et le couvercle du contacteur tournant.

De plus grâce à la résistance des fils 131, on peut avoir des pas plus faibles que dans l'art antérieur et donc transmettre plus d'informations, sans microcoupures.

Enfin on peut diminuer le poids du ruban du fait que les fils conducteurs, initialement ronds, sont laminés.

## Revendications

1. Ruban de liaison électrique pour contacteur tournant, en particulier pour véhicule automobile, comportant des conducteurs électriques (130) enrobés par un isolant électrique (131), **caractérisé en ce que**
- lesdits conducteurs (130) sont des fils aplatis à bords arrondis,
- ledit isolant électrique (131) est un matériau à faible coefficient de frottement pour obtenir un ruban globalement insonore et présentant un module d'élasticité stable pour des températures comprises entre -40°C et +100°C.

2. Ruban selon la revendication 1, **caractérisé en ce que** les bords du ruban sont arrondis.

3. Ruban selon la revendication 1 ou 2, **caractérisé en ce que** ledit isolant (131) est à base de copolymère d'éthylène et de tetrafluoréthylène.

4. Ruban selon la revendication 1 ou 2, **caractérisé en ce que** l'isolant électrique (131) est à base de polyamide 11.

5. Ruban selon la revendication 1 ou 2, **caractérisé en ce que** l'isolant est à base de résine acétal.

6. Ruban selon l'une quelconque des revendications 1 à 5, **caractérisé en ce que** les conducteurs électriques (130) sont des fils de cuivre laminés recuits.

7. Ruban selon l'une quelconque des revendications 1 à 6, **caractérisé en ce que** ledit isolant (131) électrique est extrudé sur lesdits fils conducteurs (130).

## Claims

1. Electric connection ribbon for a rotating contactor, in particular for a motor vehicle, comprising electric conductors (130) coated with an electric insulator (131), **characterized in that**
- the said conductors (130) are flattened wires with rounded edges,
- the said electric insulator (131) is a material of low friction coefficient to obtain a ribbon that is generally sound-proof and that has a stable modulus of elasticity for temperatures lying between -40°C and +100°C.

2. Ribbon according to Claim 1, **characterized in that** the edges of the ribbon are rounded.

3. Ribbon according to Claim 1 or 2, **characterized in that** the said insulator (131) is tetrafluoroethylene and ethylene copolymer-based.

4. Ribbon according to Claim 1 or 2, **characterized in that** the electric insulator (131) is polyamide 11-based.

5. Ribbon according to Claim 1 or 2, **characterized in that** the insulator is acetal resin-based.

6. Ribbon according to any one of Claims 1 to 5, **characterized in that** the electric conductors (130) are annealed laminated copper wires.

7. Ribbon according to any one of Claims 1 to 6, **characterized in that** the said electric insulator (131) is extruded onto the said conductor wires (130).

## Patentansprüche

1. Elektrisches Verbindungsband für Drehkontaktgeber, insbesondere für Kraftfahrzeuge, mit Stromleitern (130), die mit einem elektrisch isolierenden Material (131) ummantelt sind, **dadurch gekennzeichnet, dass**
- die Leiter (130) Flachdrähte mit abgerundeten Kanten sind,
- das elektrisch isolierende Material (131) ein Material mit geringem Reibbeiwert ist, um ein allgemein geräuscharmes Band mit einem bei Temperaturen zwischen -40°C und +100°C stabilen Elastizitätsmodul zu erhalten.

2. Band nach Anspruch 1, **dadurch gekennzeichnet, dass** die Bandkanten abgerundet sind.

3. Band nach Anspruch 1 oder 2, **dadurch gekennzeichnet, dass** das Isoliermaterial (131) aus einem Copolymer auf Basis von Ethylen und Tetrafluorethylen besteht.

4. Band nach Anspruch 1 oder 2, **dadurch gekennzeichnet, dass** das elektrisch isolierende Material (131) auf Polyamid 11 basiert.

5. Band nach Anspruch 1 oder 2, **dadurch gekennzeichnet, dass** das Isoliermaterial auf Acetalharz basiert.

6. Band nach einem der Ansprüche 1 bis 5, **dadurch gekennzeichnet, dass** die Stromleiter (130) geglühte Walzdrähte aus Kupfer sind.

7. Band nach einem der Ansprüche 1 bis 6, **dadurch gekennzeichnet, dass** das elektrisch isolierende Material (131) auf die Leiterdrähte (130) aufextrudiert ist.
